# EUROPÄISCHE PATENTSCHRIFT

(11) **EP 2 918 156 B1**
(45) Veröffentlichungstag und Bekanntmachung des Hinweises auf die Patenterteilung: **17.08.2016**
(21) Anmeldenummer: 15401014.4
(22) Anmeldetag: 02.03.2015
(51) Int. Cl.: A01B 59/00, A01B 51/04, A01B 59/042, A01B 59/06

(54) **ANBAUMASCHINE, INSBESONDERE FÜR DIE LANDWIRTSCHAFT**
ATTACHED MACHINE, ESPECIALLY FOR AGRICULTURAL PURPOSES
MACHINE, EN PARTICULIER AGRICOLE

(30) Priorität: 07.03.2014 DE 102014103041
(43) Veröffentlichungstag der Anmeldung: 16.09.2015
(73) Patentinhaber: Amazonen-Werke H. Dreyer GmbH & Co. KG, 49205 Hasbergen (DE)
(72) Erfinder: Holtkötter, Christian, 33775 Versmold (DE)

(56) Entgegenhaltungen:
- EP-A1- 2 260 687
- DE-A1- 10 011 401
- DE-A1- 19 908 240

## Beschreibung

Die Erfindung betrifft eine Anbaumaschine, insbesondere für die Landwirtschaft gemäß des Oberbegriffes des Patentanspruches 1.

Eine derartige Anbaumaschine ist in der Praxis bekannt geworden. Um diese Verteilmaschine sicher abstellen zu können, müssen die Abstellstützen der Abstellvorrichtung ausreichend weit von dem Schwerpunkt der Anbaumaschine entfernt sein, damit die Anbaumaschine in sicherer Weise ohne Kippgefahr abgestellt werden kann. Bei der bekannten Anbaumaschine sind in Schiebeführung angeordnete Abstellstützen vorgesehen, die schräg nach hinten herausgezogen werden können. Nachteilig ist bei diesem bekannten Abstellstützen, dass sie die Unterkante des Rahmens der Anbaumaschine nicht in ihrer Abstellposition überragen, so dass das Ankuppeln der tief stehenden Anbaumaschine erschwert ist.

Der Erfindung liegt die Aufgabe zu Grunde, eine vorteilhafte Abstellvorrichtung zu schaffen.

Diese Aufgabe wird erfindungsgemäß dadurch gelöst, dass die Abstellstütze gegenüber dem Schiebeführungselement mit zumindest einer eine begrenzte Drehbewegung der Abstellstütze bei dem Einschieben und Ausziehen der Abstellstütze gegenüber dem Schiebeführungselement erlaubende Schiebeführung angeordnet ist.

Infolge dieser Maßnahme können die Abstellstützen ausreichend weit gegenüber dem Schwerpunkt der Anbaumaschine für die abgestellte Position der Maschine verschoben werden, so dass sie ausreichend weit von dem Schwerpunkt der Anbaumaschine entfernt sind. Hierdurch wird eine sichere Abstellposition der Verteilmaschine erreicht. Gleichzeitig können die Abstellstützen für die Arbeitsposition durch die vorgesehene Drehbewegung der Abstellstützen nach oben und für die Abstellposition in einfacher Weise nach unten verschwenkt werden. Dieses Verschwenken der Abstellstützen ist besonders vorteilhaft, wenn den Abstellstützen so genannte Transportrollen zum leichten Verschieben der Anbaumaschine in Abstellposition zugeordnet sind.

Um ein möglichst einfaches und komfortables Verbringen der Abstellstützen in die jeweilige Position zu erreichen, ist vorgesehen, dass zwischen dem Schiebeführungselement und der Abstellstütze zumindest eine begrenzte Drehbewegung der Abstellstütze bei dem Einschieben und Ausziehen der Abstellstütze gegenüber dem die Schiebeführung aufweisenden Schiebeführungselement erzeugende Drehschiebeführung angeordnet ist.

Um ein zwangsweises Verschwenken der Abstellstütze bei dem ein- und ausschieben der Abstellstütze zu gewährleisten, ist vorgesehen, dass die Drehschiebeführung als in der Wand des Schiebeführungselementes angeordnete schraubenlinienförmiger Führungsschlitz und/oder -nut ausgebildet ist, dass in diesen schraubenlinienförmigen Führungsschlitz und/oder -nut ein an der Abstellstütze angeordnetes und aus der Abstellstütze herausragendes Ansatzelement fasst. Hierdurch ist sichergestellt, dass die Abstellstütze in der jeweiligen Position sich in der richtigen Stellung befinden.

Eine einfache Ausgestaltung der Schiebeführung lässt sich dadurch erreichen, dass das Schiebeführungselement als Quadratrohr und die Abstellstütze zumindest in deren in dem Schiebeführungselement verschiebbaren Bereich als rundes Rohr ausgebildet ist.

Um in einfacher Weise eine Rollvorrichtung in die Abstellvorrichtung zu integrieren, ist vorgesehen, dass die Abstellstütze an ihrem dem Schiebeführungselement abgewandten Endbereich in der Abstellposition der Abstellstütze einen den verschiebbaren Bereich der Abstellstütze und das Schiebeführungselement nach unten überragenden Abstellbereich, insbesondere eine Laufrolle einer Rollvorrichtung aufweist.

Eine vorteilhafte Ausrichtung des Schiebeführungselementes für die Abstellstütze ergibt sich dadurch, dass die Mittellinie des Schiebeführungselementes und des verschiebbaren Bereiches der Abstellstütze zumindest annähernd waagrecht, jedoch nicht mehr als 30° von der horizontalen abweichend in der Abstellposition und/oder der Arbeitsposition der Dreipunktanbaumaschine ausgerichtet ist.

Eine vorteilhafte Anordnung der Abstellstütze wird dadurch erreicht, dass jeweils in beiden seitlichen Bereichen der Dreipunktanbaumaschine ein Schiebeführungselement mit einer Abstellstütze angeordnet ist.

Ein vorteilhaftes einschieben von der beabstandet zueinander angeordneten Abstellstützen wird dadurch erreicht, dass die jeweiligen schraubenlinienförmigen Führungsschlitze der Drehschiebeführungen der beiden Schiebeführungselemente entgegengesetzt verlaufend ausgestaltet sind.

Eine vereinfachte Bedienung, um die Abstellstütze in die jeweils vorgesehene Position zu bringen, lässt sich dadurch erreichen, dass zwischen dem Schiebeführungselement und der Abstellstütze zumindest ein die Abstellstütze in Richtung der eingezogenen Arbeitsposition bewegendes Federelement angeordnet ist.

Um die Abstellstützen in der jeweiligen Abstellposition sicher zu verriegeln, ist vorgesehen, dass dem Schiebeführungselement und der Abstellstütze zumindest ein die Abstellstütze zumindest in Abstellposition der Abstellstütze fixierendes Verriegelungselement angeordnet ist. Besonders vorteilhaft ist, wenn diese Maßnahme mit der vorhergehenden Maßnahme gekoppelt ist, in dem zwischen dem Schiebeführungselement und der Abstellstütze das entsprechend angeordnete Federelement vorgesehen ist. Hierdurch lassen sich dann Fehlbedienungen für die Abstellstütze bei deren Verbringen und Sichern in der Abstellposition verhindern. Ist die Stütze nämlich nicht richtig ausgezogen und in dieser ausgezogenen Endlage nicht richtig eingerastet, d.h. in der Abstellposition nicht richtig verriegelt, fährt sie automatisch in die Transportposition durch Zurückziehen durch die Feder zurück.

Bei entsprechender Anordnung kann das Federelement als Zug- oder Druckfeder ausgebildet sein.

Um die Abstellstütze in der Arbeitsposition in der vorgesehenen Position sicher festzusetzen, ist vorgesehen, dass dem Schiebeführungselement und der Abstellstütze zumindest ein die Abstellstütze zumindest in Arbeitsposition der Anbaumaschine fixierendes Festsetzelement angeordnet ist.

Eine einfache Ausgestaltung des Festsetzelementes lässt sich dadurch erreichen, dass das Festsetzelement als in eine vorzugsweise dem Schiebeführungselement zugeordnete Schlitzführung eingreifendes vorzugsweise der Abstellstütze zugeordnetes Ansatzelement ausgebildet ist.

Weitere Einzelheiten der Erfindung sind der Beispielsbeschreibung zu entnehmen. Die Zeichnungen zeigen
- Fig.1: eine Anbaumaschine mit der erfindungsgemäßen Abstellvorrichtung in Abstellposition in perspektivischer Ansicht schräg von hinten in Prinzip- und Teildarstellung,
- Fig.2: die Anbaumaschine mit der Abstellvorrichtung in perspektivischer Ansicht schräg von vorn,

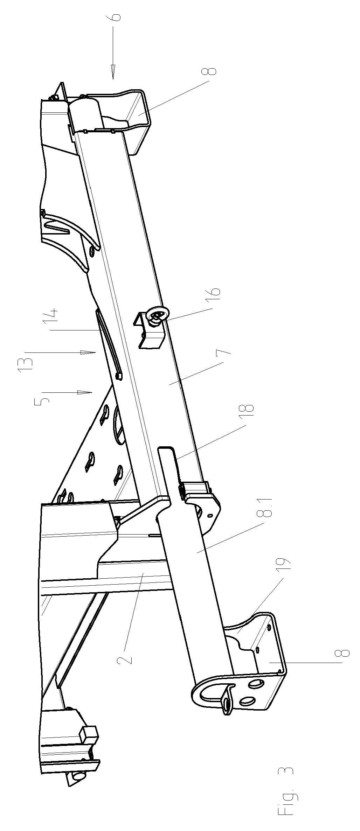

- Fig.3: die in Fahrtrichtung gesehen rechte Abstellstütze in Abstellposition in der Ansicht gemäß Fig. 1 im vergrößerten Maßstab,

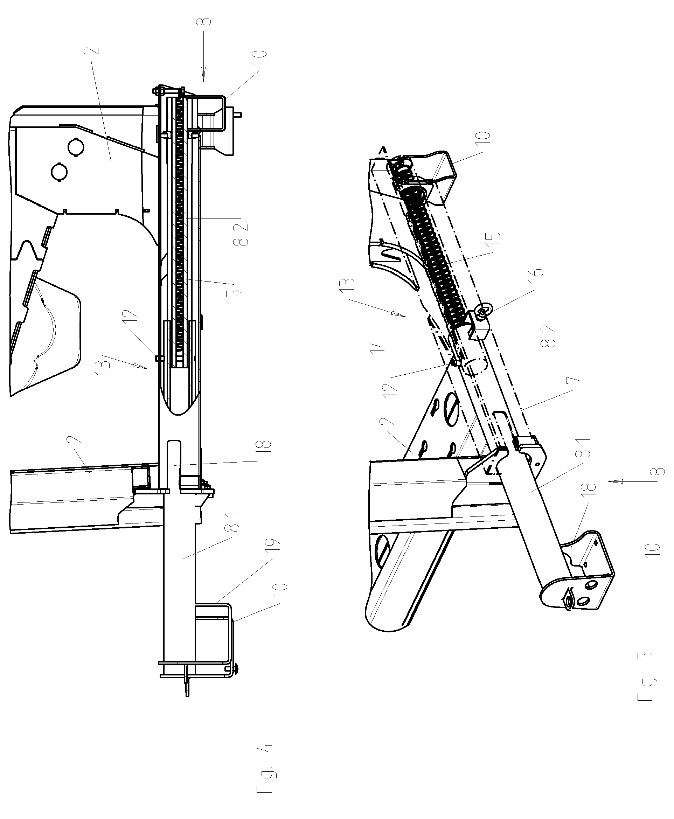

- Fig.4: die in Fahrtrichtung gesehen rechte Abstellstütze in Abstellposition gemäß Fig.3 in Seitenansicht, jedoch im Teilschnitt,
- Fig.5: die in Fahrtrichtung gesehen rechte Abstellstütze in Abstellposition in der Darstellungsweise gemäß Fig.4, jedoch in perspektivischer Ansicht,
- Fig.6: die in Fahrtrichtung gesehen rechte Abstellstütze in Abstellposition gemäß Fig.3 in Seitenansicht,
- Fig.7: die in Fahrtrichtung gesehen rechte Abstellstütze in Abstellposition in der Darstellungsweise gemäß Fig.6, jedoch im Schnitt VII - VII,

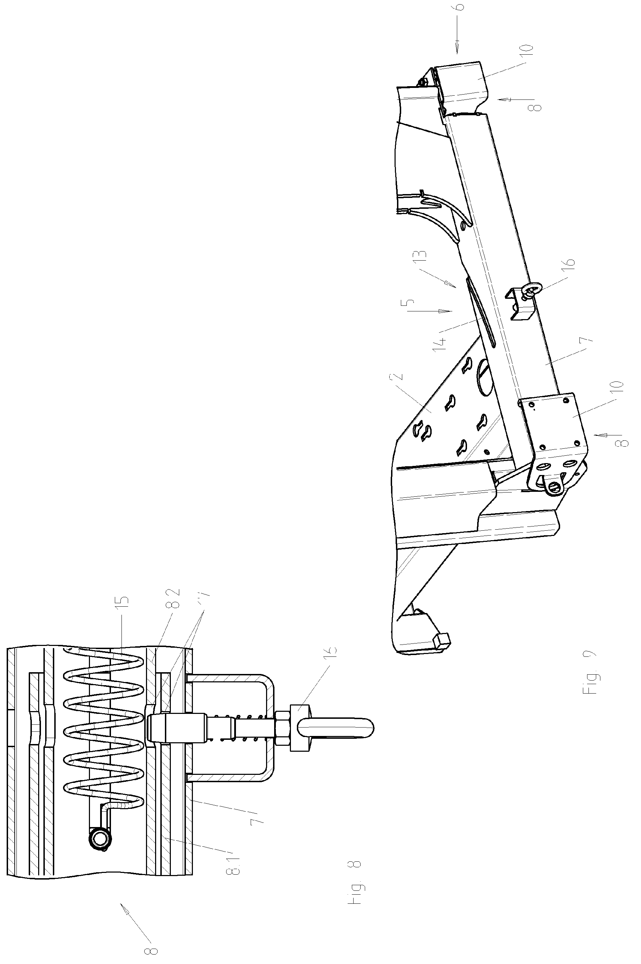

- Fig.8: die Verriegelung der Abstellstütze in ausschnittsweiser Darstellung und vergrößertem Maßstab in der Darstellungsweise nach Fig.7,
- Fig.9: die in Fahrtrichtung gesehen rechte Abstellstütze in Arbeitsposition in der Darstellungsweise nach Fig.3,
- Fig. 10: die in Fahrtrichtung gesehen rechte Abstellstütze in Arbeitsposition in der Darstellungsweise nach Fig.4,
- Fig.11: die in Fahrtrichtung gesehen rechte Abstellstütze in Arbeitsposition in der Darstellungsweise nach Fig.5,
- Fig.12: die in Fahrtrichtung gesehen rechte Abstellstütze in Arbeitsposition nach Fig.10 in Seitenansicht,
- Fig.13: die in Fahrtrichtung gesehen rechte Abstellstütze in Arbeitsposition nach Fig.12 in der Draufsicht und im Schnitt XIII-XIII,
- Fig.14: die in Fahrtrichtung gesehen linke Abstellstütze in Abstellposition in der Ansicht gemäß Fig. 1 im vergrößerten Maßstab einer anderen, vereinfachten Ausführung,
- Fig.15: die in Fahrtrichtung gesehen linke Abstellstütze in Abstellposition gemäß Fig.14 in Seitenansicht,
- Fig.16: die in Fahrtrichtung gesehen linke Abstellstütze in Abstellposition in der Darstellungsweise gemäß Fig.15, jedoch im Schnitt XVI - XVI,
- Fig.17: die in Fahrtrichtung gesehen linke Abstellstütze in Arbeitsposition in der Darstellungsweise nach Fig.2,
- Fig.18: die in Fahrtrichtung gesehen rechte Abstellstütze in Arbeitsposition nach Fig.17 in Seitenansicht und
- Fig.19: die in Fahrtrichtung gesehen rechte Abstellstütze in Arbeitsposition nach Fig.18 in der Draufsicht und im Schnitt XIX - XIX.

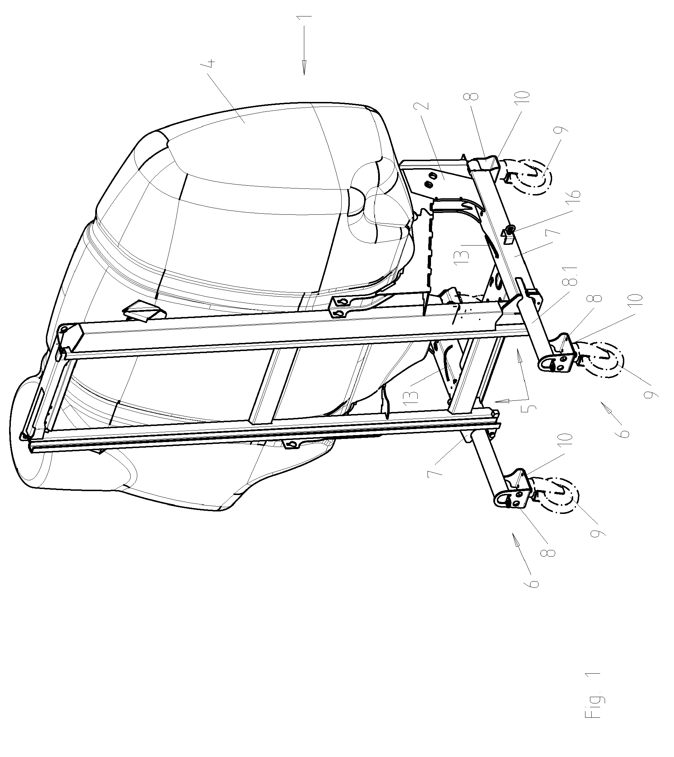

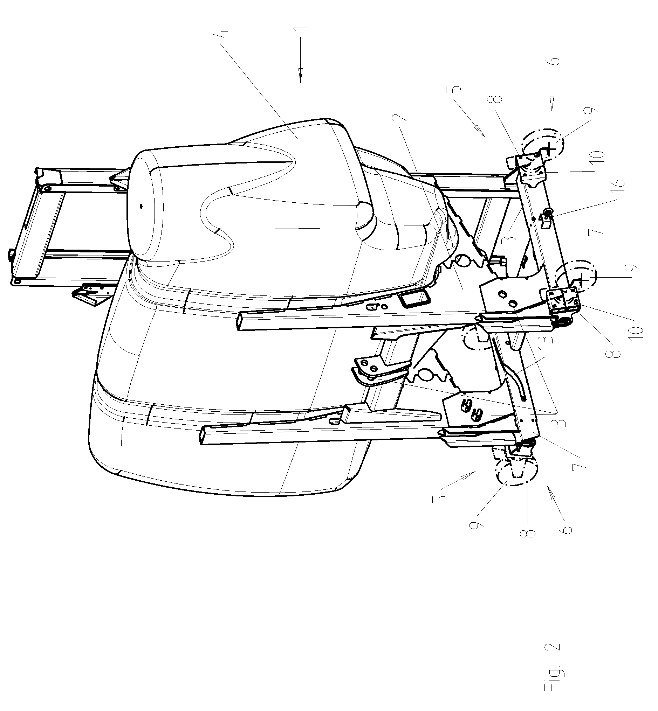

Die landwirtschaftliche Anbaumaschine ist als Verteilmaschine, im Ausführungsbeispiel als landwirtschaftliche Pflanzenschutzspritze 1 ausgebildet. In den Zeichnungen sind nur der Rahmen 2 mit den auf der Vorderseite des Rahmens 2 angeordneten Dreipunktkupplungselementen 3 und dem Flüssigkeitstank 4 dargestellt. Dem unteren Bereich 5 des Rahmens 2 der Anbaumaschine ist die Abstellvorrichtung 6 zugeordnet. Die Abstellvorrichtung 6 weist im Ausführungsbeispiel am unteren Bereich 5 des Rahmens 2 zueinander beanstandet angeordnete Schiebeführungselemente 7 auf. Hierbei ist das Schiebeführungselement 7 mit jeweils zwei Abstellstützen an dem seitlichen Bereich der Dreipunktanbaumaschine 1 angeordnet. In der Darstellung gemäß Fig.1 befindet sich die Abstellvorrichtung 6 mit ihren Abstellstützen 8 in der Abstellposition. Um die Anbaumaschine 1 bequem in der Abstellposition verschieben zu können, sind an den Abstellstützen 8 der Abstellvorrichtung 6 die mit gestrichelten Linien eingezeichneten Laufräder 9 einer Rollvorrichtung angeordnet. In der Darstellung gemäß Fig.2 sind die Abstellstützen 8 der Abstellvorrichtung 6 in die Arbeitsposition eingezogen dargestellt.

An dem unteren Ende 5 des Rahmens 2 ist das als Quadratrohr ausgebildete Schiebeführungselement 7 befestigt. In dem Quadratrohr 7 sind zwei ineinander verschiebbare, einen runden Querschnitt aufweisende Rohre 8.1 und 8.2 der jeweils nach hinten und vorne aus dem Quadratrohr 7 herausragenden Abstellstützen 8 angeordnet. Die Abstellstützen 8 weisen an ihren dem Schiebeführungselement 7 abgewandten Endbereichen jeweils in ihrer Abstellposition ein den verschiebbaren Bereich 8.1 und 8.2 der Abstellstützen 8 und das Schiebeführungselement 7 nach unten überragenden Abstellbereich 10 auf. An diesen Abstellbereichen 10 können die mit gestrichelten Linien angedeuteten als Laufrollen 9 ausgebildeten Räder der Rollvorrichtung angeordnet werden.

Die Mittellinie des Schiebeführungselementes 7 und der verschiebbaren Bereiche 8.1 und 8.2 der Abstellstützen 8 sind zumindest annähernd waagrecht, jedoch nicht mehr als 30° von der horizontalen abweichend in der Abstellposition der Maschine 1 auf einer waagrechten Fläche und oder der Arbeitsposition der Dreipunktanbaumaschine 1 ausgerichtet, wie die Fig. 1 und 2 zeigen.

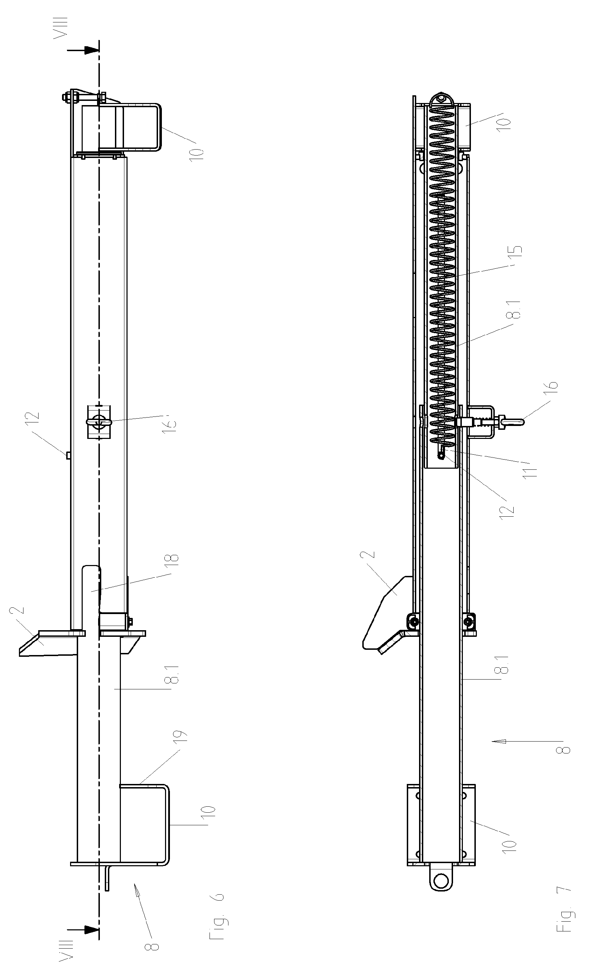

Damit die auf einer Seite der Anbaumaschine 1 in einer Schiebeführung 7 angeordneten und teleskopartig ineinander verschiebbaren Rohre 8.1 und 8.2 der Abstellstützen 8 gemeinsam verdreht werden können, ist in der Wand des Rohres 8.2 ein geradlinig verlaufender Schlitz oder Nut 11 angeordnet, in welche ein in dem anderen Rohr 8.1 angeordneter Stift 12 fast, wie dies beispielsweise die Fig.7 zeigt. Somit können in jeder eingeschobenen oder ausgezogenen Position der auf einer Seite des Rahmens 2 angeordneten Abstellstützen 8 gemeinsam in die Abstellposition nach unten und in die Arbeitsposition nach oben verschwenkt werden, wie den Zeichnungen zu entnehmen ist.

Jedem Quadratrohr 7 der Schiebeführung ist zumindest eine eine begrenzte Drehbewegung der Abstellstützen 8 bei dem Einschieben und dem Ausziehen des Abstellstützenrohres 8.1 gegenüber dem die Schiebeführung 7 und dem anderen Abstellstützenrohr 8.2 aufweisenden Schiebeführungselement erzeugende Drehschiebeführung 13 angeordnet. Diese Drehschiebeführung 13 ist als in der Wand des Quadratrohres 7 angeordneter schraubenlinienförmiger Führungsschlitz und/oder -nut 14 ausgebildet. Der vorerwähnte, als aus dem Abstellstützenrohr 8.1 herausragendes Ansatzelement ausgebildete Stift 12, der die formschlüssige Verdrehung der Rohre 8.1 und 8.2 der Abstellstütze 8 gewährleistet, weist eine derartige Länge auf, dass er in den vorgeschriebenen schraubenlinienförmigen Führungsschlitz und/oder -nut 14 zur Erzeugung der vorgeschriebenen Drehbewegung fasst. Somit wird bei einem Verschieben der Abstellstützen 8 gegenüber dem Quadratrohr 7 zwangsweise eine Verdrehung der Abstellstützen 8 aus der Abstellposition in die Arbeitsposition und umgedreht erreicht.

Die jeweiligen schraubenlinienförmigen Führungsschlitze 14 der Drehschiebeführung 13 der beiden Schiebeführungselemente 7 sind entgegengesetzt verlaufend ausgestaltet, damit die Abstellstützen 8 in ihrer Arbeitsposition in die in Fig.2 dargestellten Positionen verschwenken können.

Zwischen dem Schiebeführungselement 7 bzw. dem ein Ende der Abstellstütze 8.2 und der anderen Abstellstütze 8.1 ist eine die Abstellstütze 8.1 in Richtung der eingezogenen Arbeitsposition bewegendes Federelement 15 angeordnet. Hierdurch wird automatisch das ausziehbare Element 8.1 der Abstellstütze 8 eingezogen. Das Federelement 15 ist im Ausführungsbeispiel als Zugfeder ausgebildet.

Des weiteren ist an dem als Quadratrohr 7 ausgebildeten Schiebeführungselement ein als fehlerbelasteter Verriegelungsbolzen 16 ausgebildetes Verriegelungselement angeordnet. Mittels dieses Verriegelungselementes 16 können die Abstellstützen 8 jeweils in der Abstellposition fixiert werden. Hierzu greift der Verriegelungsbolzen 16 in die in den Abstellstützenrohr 8.1 und 8.2 angeordnete Aussparungen 17 ein. Dieser Verriegelungsbolzen 16 dient jeweils auch als die Abstellstützen 8 in der Arbeitsposition der Anbaumaschine 1 fixierendes Festsetzelement.

In dem als Quadratrohr 7 ausgebildeten Schiebeführungselement ist auf der Seite, auf der sich das einschiebbare und ausziehbare Element 8.1 der Abstellstütze 8 befindet ein als Schlitz 18 ausgebildete Schlitzführung, in welche das zugeordnete Ansatzelement 19 des verschiebbaren Teiles 8.1 der Abstellstütze 8 in der Arbeitsposition eingreift. In diese Position wird die Abstellstütze 8 durch die Feder gezogen, wenn der Verriegelungsbolzen 16 aus den Verriegelungsaussparungen in der jeweiligen Rohrwandung des Abstellstützenrohres 8.1 und 8. 2 angeordneten herausgezogen wird. In der Arbeitsposition der Abstellstützen 8 greifen der jeweilige Verriegelungsbolzen 16 in ebenfalls in den jeweiligen Rohrwandungen angeordneten Verriegelungsaussparungen 20 zur deren Verriegelung in dieser Position ein.

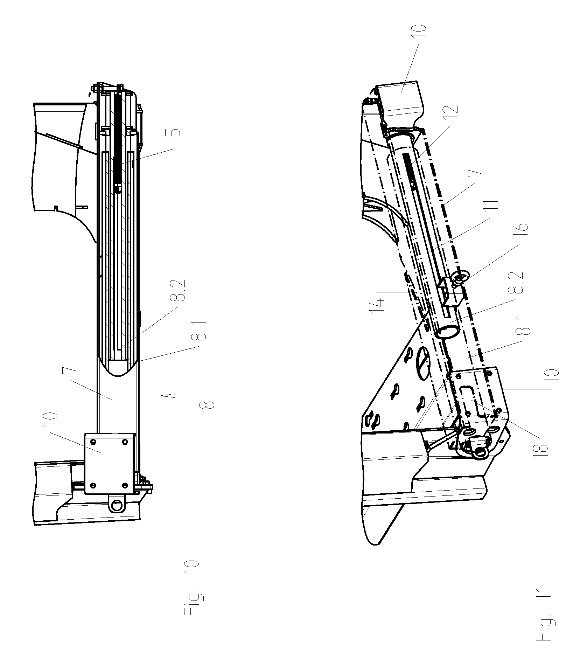

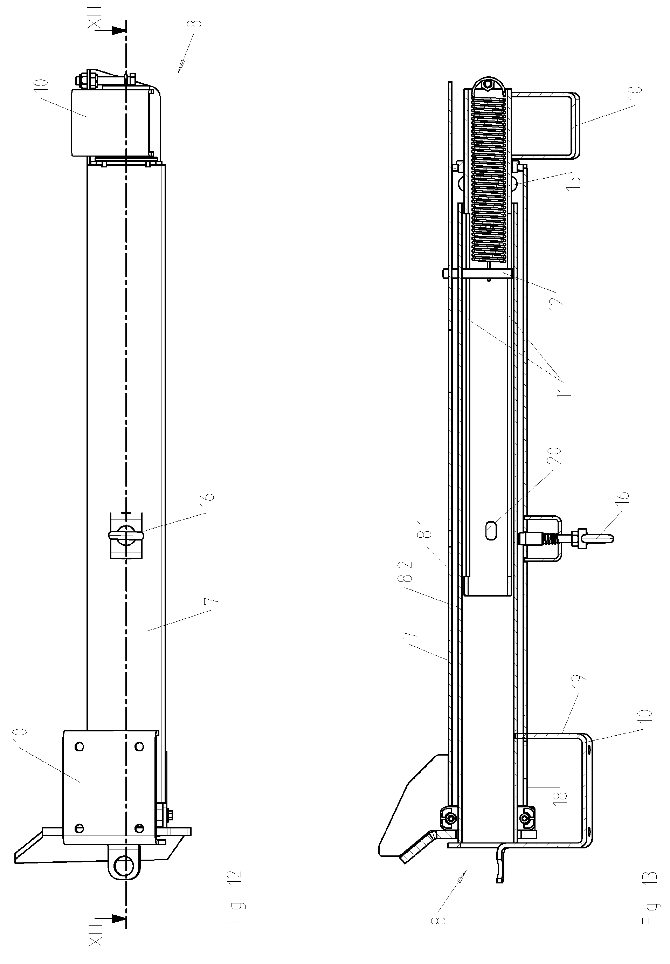

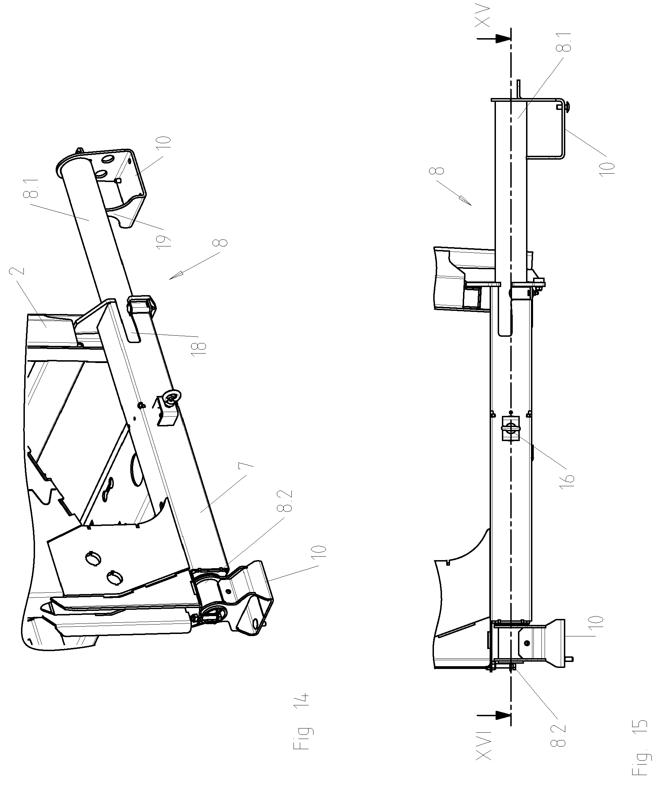

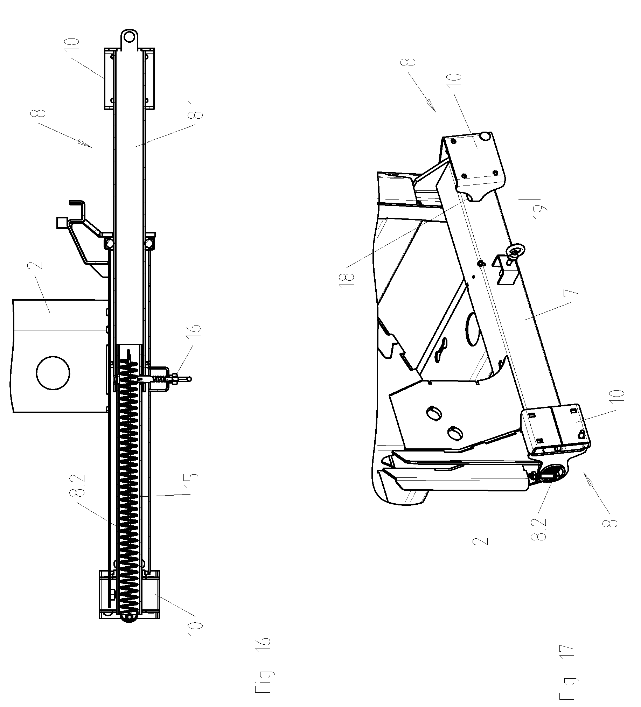

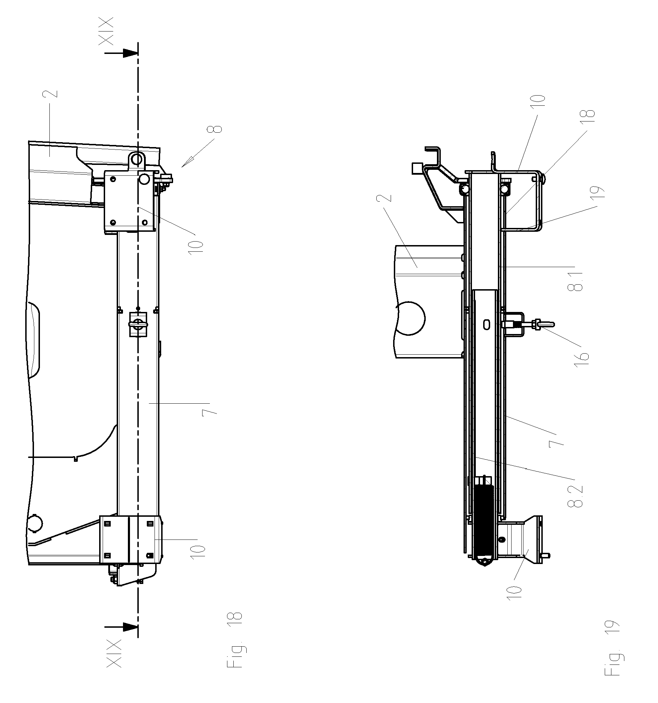

Das Ausführungsbeispiel gemäß den Fig.10 bis 19 unterscheidet sich von dem vorhergehenden Ausführungsbeispiel dadurch, dass kein schraubenlinienförmiger verlaufender Schlitz 13 in der Wand der Drehschiebeführung angeordnet und der Stift 12, der in die Schlitzführung der beiden zueinander verschiebbaren Rohrelemente 8.1 und 8.2 der Abstellstützen 8 eingreift, entsprechend verkürzt ausgebildet ist.

Um die Abstellstützen 8 jeweils in die Abstellposition oder Arbeitsposition zu verschwenken, ist es erforderlich, dass diese Schwenkbewegung der Abstellstützen 8 von dem Bediener von Hand durchgeführt wird.

## Patentansprüche

1. Anbaumaschine , insbesondere für die Landwirtschaft, wie Verteilmaschine, mit Dreipunktkupplungselementen, Rahmen und zumindest einer Abstellvorrichtung, wobei die Abstellvorrichtung zumindest eine in zumindest einer am unteren Bereich des Rahmens angeordnetes Schiebeführungselement angeordnete und in zumindest eine ausgezogene Abstellposition und in zumindest eine für die Arbeitsposition eingezogene Position zu verbringende Abstellstütze aufweist, **dadurch gekennzeichnet, dass** die Abstellstütze (8) gegenüber dem Schiebeführungselement (7) mit zumindest einer eine begrenzte Drehbewegung der Abstellstütze (8) bei dem Einschieben und Ausziehen der Abstellstütze (8, 8.1, 8.2) gegenüber dem Schiebeführungselement (7) erlaubende Schiebeführung angeordnet ist.

2. Anbaumaschine nach Anspruch 1, **dadurch gekennzeichnet, dass** zwischen dem Schiebeführungselement (7) und der Abstellstütze (8) zumindest eine begrenzte Drehbewegung der Abstellstütze (8, 8.1, 8.2) bei dem Einschieben und Ausziehen der Abstellstütze (8.1) gegenüber dem die Schiebeführung (7) aufweisenden Schiebeführungselement erzeugende Drehschiebeführung (12, 13, 14) angeordnet ist.

3. Anbaumaschine nach Anspruch 2, **dadurch gekennzeichnet, dass** die Drehschiebeführung (13) als in der Wand des Schiebeführungselementes (7) angeordnete schraubenlinienförmiger Führungsschlitz und/oder -nut (14) ausgebildet ist, dass in diesen schraubenlinienförmigen Führungsschlitz (14) und/oder -nut ein an der Abstellstütze (8, 8.1, 8.2) angeordnetes und aus der Abstellstütze (8, 8.1, 8.2) herausragendes Ansatzelement (12) fasst.

4. Anbaumaschine nach einem der vorstehenden Ansprüche, **dadurch gekennzeichnet, dass** das Schiebeführungselement (7) als Quadratrohr und die Abstellstütze (8) zumindest in deren in dem Schiebeführungselement (7) verschiebbaren Bereich als rundes Rohr (8.1, 8.2) ausgebildet ist.

5. Anbaumaschine nach einem der vorstehenden Ansprüche, **dadurch gekennzeichnet, dass** die Abstellstütze (8) an ihrem dem Schiebeführungselement (7) abgewandten Endbereich in der Abstellposition der Abstellstütze (8) einen den verschiebbaren Bereich (8.1) der Abstellstütze (8) und das Schiebeführungselement (7) nach unten überragenden Abstellbereich (10), insbesondere eine Laufrolle (9) einer Rollvorrichtung aufweist.

6. Anbaumaschine nach einem der vorstehenden Ansprüche, **dadurch gekennzeichnet, dass** die Mittellinie des Schiebeführungselementes (7) und des verschiebbaren Bereiches (8.1, 8.2) der Abstellstütze (8) zumindest annähernd waagrecht, jedoch nicht mehr als 30° von der Horizontalen abweichend in der Abstellposition und/oder der Arbeitsposition der Dreipunktanbaumaschine (1) ausgerichtet ist.

7. Anbaumaschine nach einem der vorstehenden Ansprüche, **dadurch gekennzeichnet, dass** jeweils in beiden seitlichen Bereichen der Dreipunktanbaumaschine (1) ein Schiebeführungselement (7) mit einer Abstellstütze (8) angeordnet ist.

8. Anbaumaschine nach Anspruch 6, **dadurch gekennzeichnet, dass** die jeweiligen schraubenlinienförmigen Führungsschlitze (14) der Drehschiebeführungen (13) der beiden Schiebeführungselemente (7) entgegengesetzt verlaufend ausgestaltet sind.

9. Anbaumaschine nach einem der vorstehenden Ansprüche, **dadurch gekennzeichnet, dass** zwischen dem Schiebeführungselement (7) und der Abstellstütze (8) zumindest ein die Abstellstütze (8.1) in Richtung der eingezogenen Arbeitsposition bewegendes Federelement (15) angeordnet ist.

10. Anbaumaschine nach einem der vorstehenden Ansprüche, **dadurch gekennzeichnet, dass** dem Schiebeführungselement (7) und der Abstellstütze (8) zumindest ein die Abstellstütze (8) zumindest in Abstellposition der Abstellstütze (8) fixierendes Verriegelungselement (16) angeordnet ist.

11. Anbaumaschine nach Anspruch 9, **dadurch gekennzeichnet, dass** das Federelement (15) als Zug- oder Druckfeder ausgebildet ist.

12. Anbaumaschine nach einem der vorstehenden Ansprüche, **dadurch gekennzeichnet, dass** dem Schiebeführungselement (7) und der Abstellstütze (8) zumindest ein die Abstellstütze (8) zumindest in Arbeitsposition der Anbaumaschine fixierendes Festsetzelement (16) angeordnet ist.

13. Anbaumaschine nach Anspruch 12, **dadurch gekennzeichnet, dass** das Festsetzelement als in eine vorzugsweise dem Schiebeführungselement (7) zugeordnete Schlitzführung (18) eingreifendes vorzugsweise der Abstellstütze (8) zugeordnetes Ansatzelement (19) ausgebildet ist.

## Claims

1. Mounted machine, in particular for agriculture, such as a spreader, having three-point linkage elements, a frame and at least one set-down device, wherein the set-down device has at least one support leg that is arranged in at least one sliding-guide element arranged in the lower region of the frame, and is to be moved into at least one extended set-down position and into at least one retracted position for the working position, **characterized in that** the support leg (8) is arranged with respect to the sliding-guide element (7) with at least one sliding guide that allows a limited rotary movement of the support leg (8) during the pushing in and pulling out of the support leg (8, 8.1, 8.2) with respect to the sliding-guide element (7).

2. Mounted machine according to Claim 1, **characterized in that** at least one rotary sliding guide (12, 13, 14) that produces a limited rotary movement of the support leg (8, 8.1, 8.2) during the pushing in and pulling out of the support leg (8.1) with respect to the sliding-guide element having the sliding guide (7) is arranged between the sliding-guide element (7) and the support leg (8).

3. Mounted machine according to Claim 2, **characterized in that** the rotary sliding guide (13) is in the form of a helical guide slot and/or groove (14) arranged in the wall of the sliding-guide element (7), and **in that** an attachment element (12) that is arranged on the support leg (8, 8.1, 8.2) and projects out of the support leg (8, 8.1, 8.2) engages in this helical guide slot (14) and/or groove.

4. Mounted machine according to one of the preceding claims, **characterized in that** the sliding-guide element (7) is in the form of a square tube and the support leg (8) is in the form of a round tube (8.1, 8.2) at least in its region that is movable in the sliding-guide element (7).

5. Mounted machine according to one of the preceding claims, **characterized in that** the support leg (8) has, in its end region remote from the sliding-guide element (7) and in the set-down position of the support leg (8), a set-down region (10), in particular a wheel (9) of a rolling device, that protrudes downwardly with respect to the movable region (8.1) of the support leg (8) and the sliding-guide element (7).

6. Mounted machine according to one of the preceding claims, **characterized in that** the centre line of the sliding-guide element (7) and of the movable region (8.1, 8.2) of the support leg (8) is oriented at least approximately horizontally, but deviating by no more than 30° from the horizontal, in the set-down position and/or the working position of the three-point mounted machine (1).

7. Mounted machine according to one of the preceding claims, **characterized in that** a sliding-guide element (7) having a support leg (8) is arranged in each of the two lateral regions of the three-point mounted machine (1).

8. Mounted machine according to Claim 6, **characterized in that** the respective helical guide slots (14) of the rotary sliding guides (13) of the two sliding-guide elements (7) are configured to extend in an opposite manner to one another.

9. Mounted machine according to one of the preceding claims, **characterized in that** at least one spring element (15) that moves the support leg (8.1) in the direction of the retracted working position is arranged between the sliding-guide element (7) and the support leg (8).

10. Mounted machine according to one of the preceding claims, **characterized in that** at least one locking element (16) that fixes the support leg (8) at least in the set-down position of the support leg (8) is arranged at the sliding-guide element (7) and the support leg (8).

11. Mounted machine according to Claim 9, **characterized in that** the spring element (15) is in the form of a tension spring or compression spring.

12. Mounted machine according to one of the preceding claims, **characterized in that** at least one securing element (16) that fixes the support leg (8) at least in the working position of the mounted machine is arranged at the sliding-guide element (7) and the support leg (8).

13. Mounted machine according to Claim 12, **characterized in that** the securing element is in the form of an attachment element (19) that engages in a guide slot (18) assigned preferably to the sliding-guide element (7) and is assigned preferably to the support leg (8).

## Revendications

1. Machine portée, en particulier pour l'agriculture, comme une machine de répartition, avec des éléments d'attelage à trois points, un châssis et au moins un dispositif d'arrêt, dans laquelle le dispositif d'arrêt présente au moins un support disposé dans au moins un élément de guidage coulissant agencé dans la région inférieure du châssis et pouvant être amené dans au moins une position d'arrêt étendue et dans une position de travail rentrée, **caractérisée en ce que** le support (8) est disposé par rapport à l'élément de guidage coulissant (7) avec au moins un guidage coulissant permettant un mouvement de rotation limité du support (8) lors de la rentrée et de l'extraction du support (8, 8.1, 8.2) par rapport à l'élément de guidage coulissant (7).

2. Machine portée selon la revendication 1, **caractérisée en ce qu'**un guidage coulissant rotatif (12, 13, 14) produisant au moins un mouvement de rotation limité du support (8, 8.1, 8.2) lors de la rentrée et de l'extraction du support (8.1) par rapport à l'élément de guidage coulissant présentant le guidage coulissant (7) est disposé entre l'élément de guidage coulissant (7) et le support (8).

3. Machine portée selon la revendication 2, **caractérisée en ce que** le guidage coulissant rotatif (13) est réalisé sous la forme d'une fente et/ou d'une rainure (14) de forme hélicoïdale pratiquée dans la paroi de l'élément de guidage coulissant (7) et **en ce qu'**un téton (12) disposé sur le support (8, 8.1, 8.2) et saillant sur le support (8, 8.1, 8.2) s'engage dans cette fente et/ou rainure de guidage de forme hélicoïdale (14).

4. Machine portée selon l'une quelconque des revendications précédentes, **caractérisée en ce que** l'élément de guidage coulissant (7) est réalisé en forme de tube carré et le support (8) est réalisé en forme de tube rond (8.1, 8.2) au moins dans sa région pouvant coulisser dans l'élément de guidage coulissant (7).

5. Machine portée selon l'une quelconque des revendications précédentes, **caractérisée en ce que** le support (8) présente, à sa région d'extrémité détournée de l'élément de guidage coulissant (7) dans la position d'arrêt du support (8), une région de support (10), en particulier un galet (9) d'un dispositif de roulement, dépassant vers le bas la région coulissante (8.1) du support (8) et l'élément de guidage coulissant (7).

6. Machine portée selon l'une quelconque des revendications précédentes, **caractérisée en ce que** la ligne centrale de l'élément de guidage coulissant (7) et de la région coulissante (8.1, 8.2) du support (8) est orientée au moins approximativement à l'horizontale, en ne s'écartant cependant pas de plus de 30° par rapport à l'horizontale dans la position d'arrêt et/ou dans la position de travail de la machine portée attelée à trois points (1).

7. Machine portée selon l'une quelconque des revendications précédentes, **caractérisée en ce qu'**un élément de guidage coulissant (7) avec un support (8) est disposé respectivement dans les deux régions latérales de la machine portée attelée à trois points (1).

8. Machine portée selon la revendication 6, **caractérisée en ce que** les fentes de guidage respectives (14) de forme hélicoïdale des guidages coulissants rotatifs (13) des deux éléments de guidage coulissant (7) sont configurées pour s'étendre en opposition.

9. Machine portée selon l'une quelconque des revendications précédentes, **caractérisée en ce qu'**au moins un élément de ressort (15) déplaçant le support (8) en direction de la position de travail rentrée est disposé entre l'élément de guidage coulissant (7) et le support (8.1).

10. Machine portée selon l'une quelconque des revendications précédentes, **caractérisée en ce qu'**au moins un élément de verrouillage (16) fixant le support (8) au moins en position d'arrêt du support (8) est disposé entre l'élément de guidage coulissant (7) et le support (8).

11. Machine portée selon la revendication 9, **caractérisée en ce que** l'élément de ressort (15) est constitué par un ressort de traction ou de compression.

12. Machine portée selon l'une quelconque des revendications précédentes, **caractérisée en ce qu'**au moins un élément d'immobilisation (16) fixant le support (8) au moins en position de travail de la machine portée est disposé entre l'élément de guidage coulissant (7) et le support (8).

13. Machine portée selon la revendication 12, **caractérisée en ce que** l'élément d'immobilisation est réalisé sous la forme d'un élément saillant (19) de préférence associé au support (8) et engagé dans une fente de guidage (18) associée de préférence à l'élément de guidage coulissant (7).
